# EUROPEAN PATENT APPLICATION

(11) **EP 1 362 809 A1**
(43) Date of publication of application: **19.11.2003**
(21) Application number: 03010803.9
(22) Date of filing: 14.05.2003
(51) Int. Cl.: B65G 45/22, B65G 45/24, B65G 45/26

(54) **Device for cleaning a conveyor belt**

(30) Priority: 15.05.2002 IT BO20020301
(71) Applicant: Makor S.r.l., 53048 Pieve di Sinalunga (Siena) (IT)
(72) Inventor: Ceccuzzi, Mario, 53040 Abbadia Di Montepulciano (Siena) (IT)
(74) Representative: Lanzoni, Luciano

(57) **Abstract**

A conveyor for transporting parts (2) in installations for the treatment of the parts comprises an endless belt (3) trained round two end pulleys (4, 5) defining an upper section (3a) for conveying the parts (2) to be treated and a lower return section (3b) where there is a device (9) for cleaning the outside surface of the belt (3). The device (9) comprises two containers (10, 11) for holding a fluid substance and closed at the top by the return section (3b) of the endless belt (3). To guarantee contact between the fluid substance and the outside surface of the belt (3) return section (3b), there are rollers (19) acting on the inside surface of the return section (3b) at the containers (10, 11) so as to deflect a part of the section (3b) itself towards the inside of the containers (10, 11).

## Description

The present invention relates to a conveyor for transporting parts in an installation where the parts are treated with fluid products, or, more specifically, in an installation where the parts to be treated are carried by an endless conveyor belt through a station where the parts are sprayed with fluid products, such as varnishes, paints, adhesives and similar products, for example using spray guns.

During treatment, the excess fluids are deposited on the surface of the conveyor belt which must therefore be cleaned and at least part of the excess fluids recycled. Obviously, the cleaning and recycling operations must be performed along the section of the conveyor's path between the position where the treated parts are removed from the conveyor and the position where untreated parts are placed on it.

Prior art cleaning and recycling devices comprise rotary brushes which scrub the dirty surface of the conveyor belt, padded rollers which apply solvent and cleaning scrapers acting directly on the conveyor belt surface. The disadvantages of these devices are due to the high pressure which must be applied to the surface of the belt by the brushes, rollers and scrapers in order to effectively clean the belt and recover the excess fluids, causing rapid belt wear and consuming large amounts of energy.

The present invention has for an object to provide a conveyor equipped with a cleaning device that is free of the above mentioned disadvantages.

Accordingly, the present invention provides a conveyor for transporting parts in installations for the treatment of the parts with fluid products, comprising an endless belt trained round two end pulleys defining an upper section for conveying the parts to be treated and a lower return section, and at least one device for cleaning the outside surface of the belt, the conveyor being characterised in that the cleaning device comprises at least one container for holding a fluid substance and closed at the top by the return section of the endless belt.

The invention will now be described with reference to the accompanying drawings which illustrate non-restricting preferred embodiments of it and in which:
- Figures 1, 4, 7 and 10 are schematic side views of four different embodiments of a conveyor made according to the present invention;
- Figures 2, 5, 8 and 11 are schematic plan views of the four embodiments illustrated in Figures 1, 4, 7 and 10, respectively;
- Figures 3, 3a, 6, 9, 9a and 12 are scaled up detail views of a part of the four embodiments illustrated in Figures 1, 4, 7 and 10, respectively;
- Figure 13 is a schematic side view, with some parts cut away, of another embodiment of the conveyor according to the present invention;

With reference to the accompanying drawings, the numeral 1 denotes in its entirety a conveyor for transporting parts 2 in an installation for treating the parts 2 with fluid products.

The conveyor 1 comprises an endless belt 3 trained round two end pulleys 4 and 5, at least one of which is power-driven to feed the parts 2 supported by the upper conveying section 3a of the belt 3 in the direction 6 through a treatment station 7 where spraying means 8 such as spray guns or nozzles spray fluid products, such as varnishes, paints, adhesives and similar products on the parts 2.

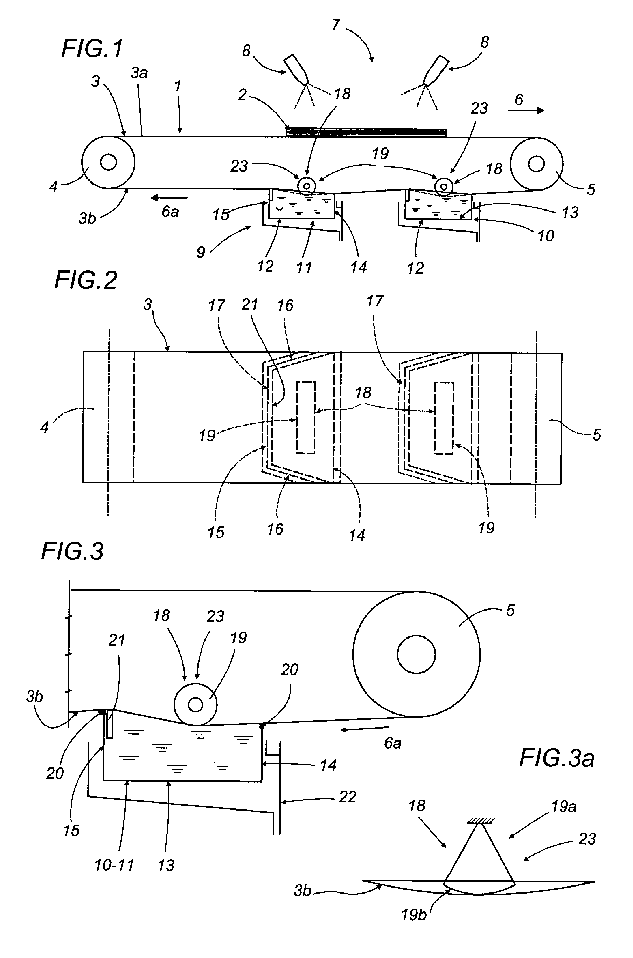

As illustrated in particular in Figures 1, 2 and 3, the belt 3 of the conveyor 1 is equipped on its lower return section, labelled 3b, moving in direction 6a, with a cleaning device, denoted in its entirety by the numeral 9, for cleaning the outside surface of the belt 3 itself.

According to the present invention, the cleaning device 9 comprises a first container and a second container, labelled 10 and 11, for holding a fluid substance. Each of the containers 10 and 11 consists of a tank 12 with a bottom 13 and, as shown in the plan view of Figure 2, has a trapezium shape defined by two walls 14 and 15 transversal to the direction 6a and two side walls 16 converging in the direction 6a. The wall 15 will also be referred to as front transversal wall and the wall 14 as rear transversal wall, with respect to the direction 6a.

The free upper edges of the walls 14, 15 and 16, labelled 17 as a whole, are in contact with the outside surface of the return section 3b of the belt 3.

The cleaning device 9 further comprises auxiliary means 18, associated with each of the containers 10 and 11, for keeping the fluid substance located in the containers 10 and 11 in contact with the outside surface of the return branch 3b of the belt 3, and for keeping the return section 3b well against the edges 17 so that the containers 10 and 11 are well closed by the belt 3 itself.

In the embodiment illustrated in Figures 1, 2 and 3, the auxiliary means 18 consist of idle rollers 19 whose axes are parallel to the axes of the pulleys 4 and 5 and whose longitudinal dimensions are smaller than the transversal dimension of the belt 3. The rollers 19 are in contact with the inside surface of the return section 3b, below the plane made by the edges 17, in such a way as to constitute means 23 for deflecting a part of the return section 3b of the belt 3 towards the inside of the containers 10 and 11, thus guaranteeing contact between the fluid substance and the belt 3. As shown in Figure 3a, the rollers 19 may be substituted by fixed deflectors 19a having a substantially arc-shaped lower face 19b touching the inside surface of the belt return section 3b.

As illustrated in more detail in Figure 3, the pressing action of the rollers 19, besides causing the return section 3b of the belt 3 to be deflected downwardly into the containers 10 and 11, also causes interaction with the side walls 16 of the containers 10 and 11 such as to transversely deform the belt 3, thus upwardly deflecting the edges of the return section 3b.

Along the edges 17 of the walls 14, 15 and 16 of the containers 10 and 11 there are seals 20, which are designed to minimise the amount of fluid escaping from the containers 10, 11 and whose transversal dimension is the same as the transversal dimension of the belt 3.

The containers 10 and 11 are also equipped with scrapers 21 mounted in contact with the outside surface of the belt 3 return section 3b, each scraper 21 being located at the edges 17 of the front walls 15 and side walls 16. Looking in more detail at a plan view of the conveyor (Figure 2), each scraper 21 is shaped like an open U having a central section coinciding with the edge 17 of the wall 15 and two side sections coinciding with the edges 17 of the side walls 16.

Thus, during use, the scraper 21 tends to convey the fluid substance scraped off the outside surface of the section 3b towards the centre, preventing the edges of the belt 3 from being dirtied.

The fluid substance inside the first container 10 is preferably the same as that used for treating the parts 2 at the station 7 and is used to regenerate the fluid substance itself which, upon being sprayed on the parts 2 at the station 7, inevitably comes into contact with the outside surface of the belt 3 and tends to dry. Thus, this first stage of cleaning the belt 3 also has the function of recycling the fluid substance which is collected in the container and can be re-used directly by the treatment station 7, The second container 11, which constitutes a second stage of cleaning the belt 3, may contain a fluid solvent suitable for cleaning the belt 3.

Each of the containers 10 and 11 has a tank 22 under it for collecting the fluid substance in excess or that escapes from the containers 10 and 11 themselves.

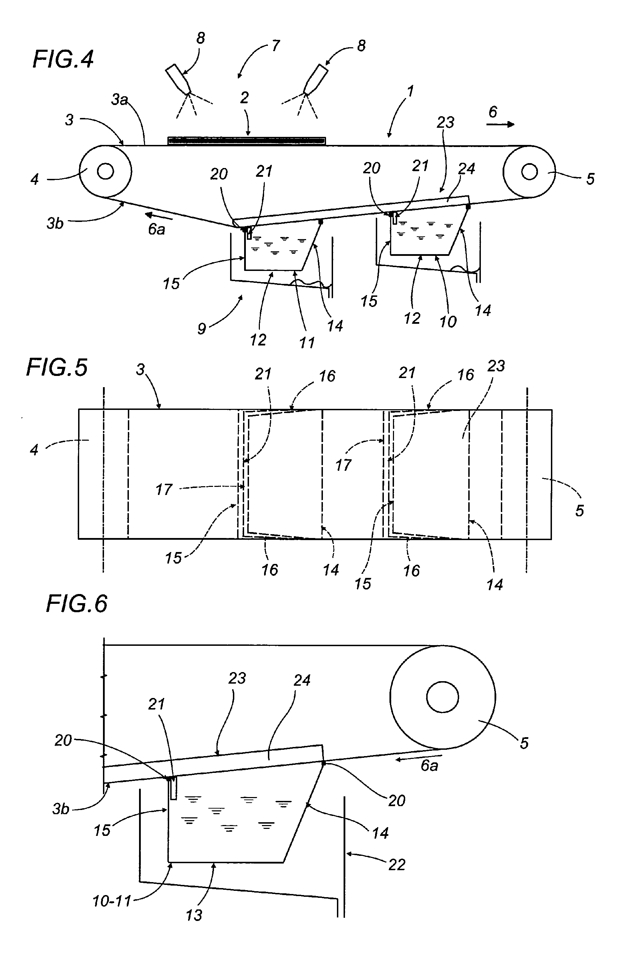

The embodiment illustrated in Figures 4, 5 and 6 differs from the one described above solely in that the auxiliary means 18 comprise deflecting means 23 consisting of a plate 24 that is substantially the same width as the belt 3 and is mounted in contact with the inside surface of the return section 3b of the belt 3.

The plate 24 is inclined downwardly in the feed direction 6a, is made of a self-lubricating material and is designed to make a part of the belt 3 return section 3b slope downwards at least at the two containers 10 and 11 so that the upper edges 17 of the container walls 14 and 15 are located at two different levels according to the sloping part of the return section 3b. More specifically, the edge 17 of the front wall 15 is positioned at a level below the edge 17 of the wall 14 so as to wet the outside surface of the return section 3b by skimming the surface of the fluid substance inside the containers 10 and 11. The fluid substance overflows into the tanks 22.

With reference to Figure 6 in particular, it should be noticed that the edges 17 of the rear walls 14 of the containers 10 and 11 need not be in contact with the belt 3.

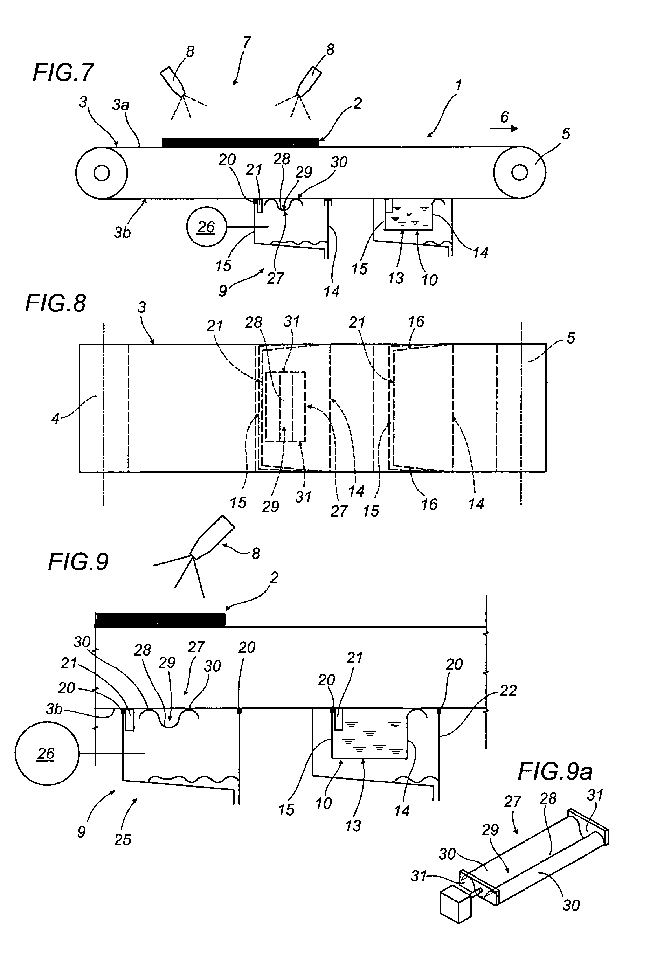

The embodiment illustrated in Figures 7, 8 and 9a differs from the one described above with reference to Figures 1, 2 and 3 solely in that the auxiliary means 18 comprise means 25 for pressurising the fluid substance inside the containers 10 and 11. These means may, for example, consist of pumps 26 associated with the containers 10 and 11.

With reference to Figures 7, 9 and 9a, in the first cleaning stage comprising the container 10, pressure is applied to the fluid substance directly inside the container 10 so that it comes into contact with the outside surface of the belt 3 return section 3b. In the second cleaning stage of the cleaning device 9, the container 11 consists of a wall 27 that is corrugated transversely to the feed direction 6b of the belt 3 return section 3b, this corrugated wall constituting the means 25 for pressurising the fluid substance. The concave portions 28 of the wall 27 form a plurality of transversal channels 29 for containing the fluid substance, and the convex portions 30 form wiping contact elements that touch the outside surface of the section 3b of the belt 3. As shown in Figure 9a, the corrugated wall 27 is closed at its longitudinal ends by the walls 31 and the fluid substance is fed into the channels 29 under pressure by the pump 26.

The channels 29 of the corrugated wall 27 constitute a plurality of tanks which, acting in conjunction with the pump 26, carry the fluid substance into contact with the outside surface of the section 3b of the belt 3, while the convex portions 30 exert a wiping action on the belt 3 itself.

In addition to the solution illustrated in Figures 7 and 9, the cleaning device 9 may comprise two cleaning stages consisting of two containers both like the container 10 or both of the type comprising the corrugated wall 27.

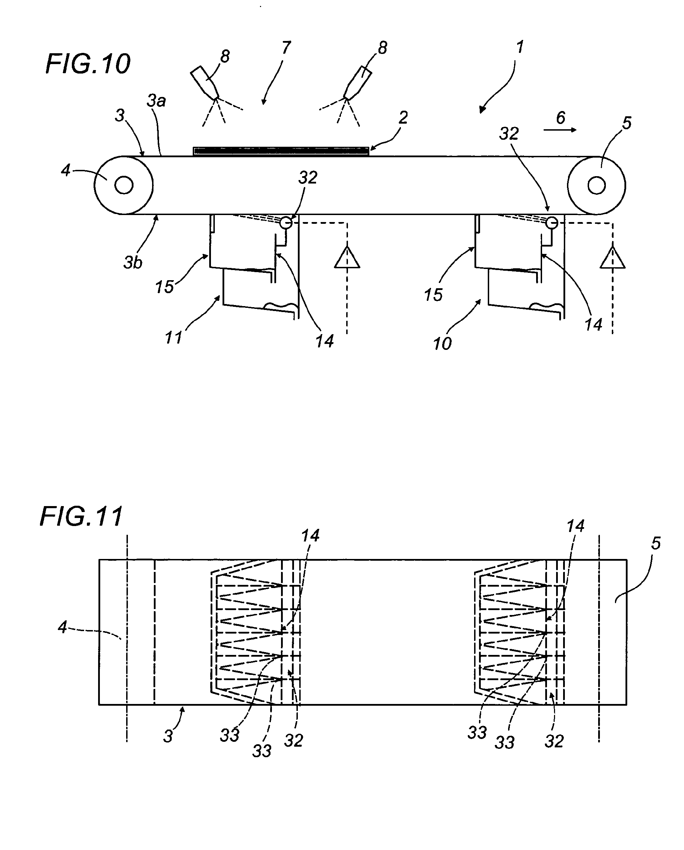

The embodiment illustrated in Figures 10, 11 and 12 differs from the one described above with reference to Figures 1, 2 and 3 solely in that the auxiliary means 18 comprise spraying means 32 facing the outside surface of the section 3b and mounted at the wall 14 of the respective containers 10 and 11. As illustrated in Figure 11, the spraying means 32 consist of a plurality of nozzles 33 lined up with each other in a direction transversal to the belt 3 with the jets directed at the central portions of the respective scrapers 21.

Also in all the embodiments illustrated in Figures 4 to 12, the fluid substance used in the first and second cleaning stages is the same as that used for treating the parts 2 at the station 7, or it may be a fluid solvent suitable for cleaning the belt 3.

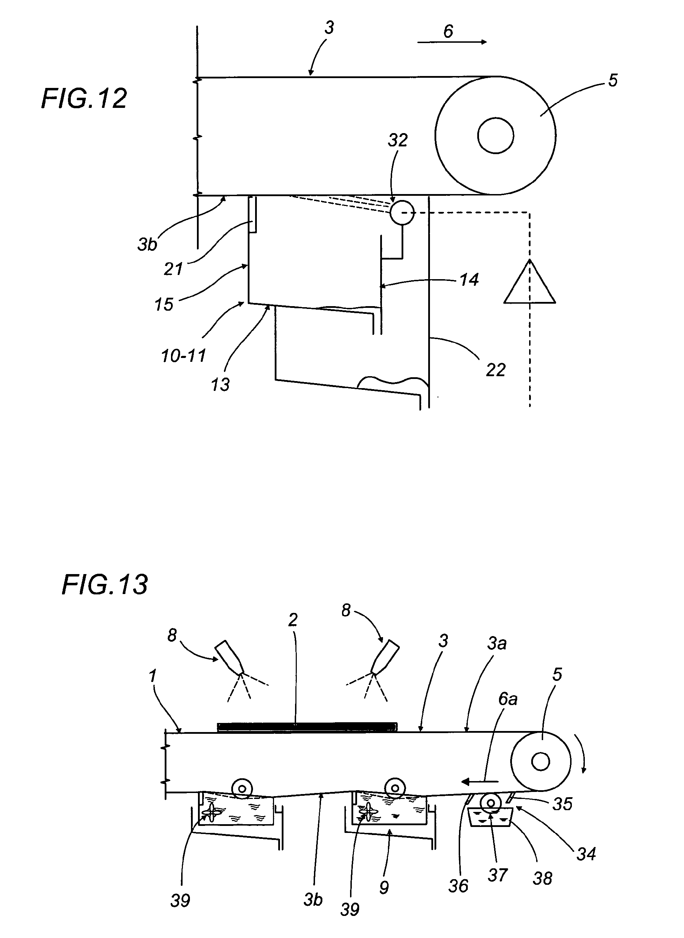

Lastly, according to the embodiment illustrated in Figure 13, the cleaning device 9 may comprise yet another cleaning stage 34 positioned on the return section 3b just downstream of the pulley 5 and comprising a first scraper 35 and a second scraper 36 with an interposed roller 37 which, in Figure 13, rotates in clockwise direction, and which is partly immersed in a tank 38 located under it and containing a fluid solvent.

During use, the first scraper 35 removes most of the impurities from the outside surface of the belt 3, downstream of the point of contact between the pulley 5 and the belt 3, and the roller 37 moistens the surface of the section 3a of the belt 3 to soften up dry dirt. The second scraper 36 then scrapes off the dirt that has been softened up.

This embodiment is especially effective when the parts 2 are treated with quick-drying fluids, for example, products based on fast-acting catalysts or solvents.

It should also be noticed that in the embodiment of Figure 13, the tanks 12 are equipped with stirrers 39 which keep the fluid contained in the tanks 12 in motion, so that the paint is not separated from the solvent and does not settle on the bottom.

It will be understood that the invention can be adapted and modified in several ways without thereby departing from the scope of the inventive concept. Moreover, all the details of the invention may be substituted by technically equivalent elements.

## Claims

1. A conveyor for transporting parts (2) in installations for the treatment of the parts with fluid products, comprising an endless belt (3) trained round two end pulleys (4, 5) defining an upper section (3a) for conveying the parts (2) to be treated and a lower return section (3b), and at least one device (9) for cleaning the outside surface of the belt (3), the conveyor being **characterised in that** the cleaning device (9) comprises at least one container (10, 11) for holding a fluid substance and closed at the top by the return section (3b) of the endless belt (3).

2. The conveyor according to claim 1, **characterised in that** it comprises auxiliary means (18) to guarantee contact between the fluid substance and the outside surface of the belt (3) return section (3b) at the respective container (10, 11).

3. The conveyor according to claim 2, **characterised in that** the auxiliary means (18) comprise means (23) for deflecting at least a part of the return section (3b) of the belt (3) towards the inside of the respective container (10, 11).

4. The conveyor according to claim 3, **characterised in that** the deflecting means (23) comprise at least one roller (19) acting on the inside surface of the return section (3b) of the belt (3).

5. The conveyor according to claim 3, **characterised in that** the deflecting means (23) comprise a fixed deflecting device (19a).

6. The conveyor according to claims 3, 4 and 5, **characterised in that** the deflecting means (23) are in contact with the inside surface of the belt (3) return section (3b) below a plane made at least by the transversal edges (17) of the respective container (10, 11).

7. The conveyor according to claim 2, **characterised in that** the auxiliary means (18) comprise deflecting means (23, 24) for making at least a part of the belt (3) return section (3b) slope downwards at least at the respective container (10, 11).

8. The conveyor according to claim 7, **characterised in that** at least the two transversal edges (17) of the container (10, 11) are located at two different levels according to the sloping part of the return section (3b).

9. The conveyor according to claim 2, **characterised in that** the auxiliary means (18) comprise means (25, 26) for pressurising the fluid substance inside the respective container (10, 11).

10. The conveyor according to claim 9, **characterised in that** the means (25, 26) for pressurising the fluid substance comprise a wall (27) that is corrugated transversely to the feed direction of the belt (3), the concave portions (28) constituting a plurality of transversal channels (29) for containing the fluid substance, and the convex portions (30) constituting wiping contact elements that touch the outside surface of the section (3b) of the belt (3); the fluid substance being fed into the channels (29) by a pump (26).

11. The conveyor according to claim 2, **characterised in that** the auxiliary means (18) comprise spraying means (32, 33) facing the outside surface of the belt (3) return section (3b) and mounted at the respective container (10, 11).

12. The conveyor according to one of the foregoing claims from 1 to 11, **characterised in that** the cleaning device (9) comprises at least two containers (10, 11).

13. The conveyor according to claim 12, **characterised in that** the first of the two containers (10, 11) is used to hold a fluid substance that is the same as that used for treating the parts (2); the second of the two containers (10,11) beig used to hold a fluid solvent suitable for cleaning the belt (3).

14. The conveyor according to one of the foregoing claims from 1 to 12, **characterised in that** there are sealing means (20) between the edges (17) of the containers (10, 11) and the outside surface of the belt (3) return section (3b).

15. The conveyor according to one of the foregoing claims from 1 to 14, **characterised in that**, at each of the containers (10, 11), there is a scraper (21) mounted in contact with the surface of the belt (3) return section (3b).

16. The conveyor according to claim 14, **characterised in that** each scraper (21) is mounted at an edge (17) of the respective container (10, 11) downstream in the feed direction (6a) of the belt (3) return section (3b).

17. The conveyor according to claim 15 or 16, **characterised in that** each scraper (21) has a central section transversal to the belt (3) and two side sections converging in the feed direction of the belt (3) return section (3b).

18. The conveyor according to claim 17, **characterised in that** the three sections of each scraper (21) coincide with an upper edge (17) of one of the containers (10, 11), the scrapers (21) extending for a length equal to the width of the belt (3).

19. The conveyor according to claim 6, **characterised in that** the length of each roller (19) and of each fixed deflector (19a) is smaller than the width of the belt (3).

20. The conveyor according to claim 11, **characterised in that** the cleaning device (9) comprises first and second spraying means (32,33) associated with the first and second containers (10,11), respectively, the first spraying means (32,33) being used to spray a fluid substance of the same type as that used to treat the parts, and the second spraying means (32,33) being used to spray a solvent fluid for cleaning the belt (3).

21. The conveyor according to one of the foregoing claims from 1 to 20, **characterised in that** each of the containers (10, 11), has a tank (22) mounted under it.

22. The conveyor according to claim 14, **characterised in that** the seals (20) constitute means for sealing and scraping the outside surface of the belt (3) return section (3b).

23. The conveyor according to claim 2, **characterised in that** it comprises a further cleaning stage (34) comprising scraping means (35, 36) and rotary means (37) positioned on the return section (3b) just downstream of the pulley (5).

24. The conveyor according to claim 23, **characterised in that** the scraping means (35, 36) comprise, in the direction of feed of the return section (3b), a first scraper (35) and a second scraper (36) between which the rotary means, consisting of a roller (37) turning in the same direction as the pulley 5, are mounted.

25. The conveyor according to one of the foregoing claims from 1 to 24, **characterised in that** stirring means (39) are mounted inside the containers (10, 11).
